# EUROPÄISCHE PATENTANMELDUNG

(11) **EP 4 286 261 A1**
(43) Veröffentlichungstag der Anmeldung: **06.12.2023**
(21) Anmeldenummer: 23174032.5
(22) Anmeldetag: 17.05.2023
(51) Int. Cl.: B62K 19/32

(54) **LENKSYSTEM FÜR FAHRRADLENKER MIT LENKANSCHLAGSEINRICHTUNG**

(30) Priorität: 02.06.2022 DE 202022103131 U
(71) Anmelder: Canyon Bicycles GmbH, 56073 Koblenz (DE)
(72) Erfinder: Ströer, Moritz, 56068 Koblenz (DE); Malmeryd, Leo, 11667 Stockholm (SE); Thoma, Vincenz, 87538 Obermaiselstein (DE)
(74) Vertreter: dompatent von Kreisler Selting Werner - Partnerschaft von Patent- und Rechtsanwälten mbB

(57) **Zusammenfassung**

Ein Lenksystem für Fahrradlenker weist einen Gabelschaft (16) auf, in dem ein Gabelrohr (10) über zwei Lagerelemente (12, 14) schwenkbar gelagert ist. Zur Begrenzung des Lenkanschlags ist ein erstes Anschlagelement (18) mit dem Gabelschaft (16) verbunden. Ein zweites Anschlagelement (28) ist mit dem Fahrradrahmen, insbesondere dem Gabelrohr (10) verbunden. Das erste Anschlagelement (18) ist zwischen den beiden Lagerelementen (12, 14) innerhalb des Gabelrohrs (10) angeordnet.

## Beschreibung

Die Erfindung betrifft einen Lenksystem für Fahrradlenker.

Beispielsweise bei einem Sturz oder wenn ein Fahrrad umfällt, besteht das Risiko einer Beschädigung des Oberrohrs, insbesondere durch am Lenker monierte Bauteile wie Brems- und/oder Schaltgriffe. Derartige Beschädigungen müssen insbesondere bei aus faserverstärkten Kunststoffen wie aus Karbon hergestellten Fahrradrahmen vermieden werden, da dies gegebenenfalls sogar zu einer Zerstörung des Fahrradrahmens führen kann.

Aus DE 20 2012 008 119.5 ist ein Lenkanschlag bekannt, der ein erstes am Gabelschaft einer Fahrradgabel klemmend fixierbares Anschlagelement aufweist. Ein zweites Anschlagelement, das zur Begrenzung eines Lenkeinschlags dient, wirkt mit dem ersten Anschlagelement zusammen. Das zweite Anschlagelement ist mit zwei Schrauben an einer Oberseite des Oberrohrs befestigt. Ein derartiger Lenkanschlag ist zwar für Mountainbikes und Trekkingräder gut geeignet, weist jedoch den Nachteil auf, dass derartige außenliegende Lenksysteme schmutzempfindlich sind.

Aufgabe der Erfindung ist es, ein insbesondere vor Verschmutzung geschütztes Lenksystem für Fahrradlenker zu schaffen.

Die Lösung der Aufgabe erfolgt erfindungsgemäß durch einen Lenksystem mit den Merkmalen des Anspruchs 1.

Das erfindungsgemäße Lenksystem für Fahrräder weist einen Gabelschaft einer Vorderradgabel auf, der insbesondere über eine Gabelbrücke mit zwei Gabelbeinen verbunden ist. An dem in montiertem Zustand oberen Ende des Gabelschaftes kann über einen Lenkervorbau ein Lenker mit dem Gabelschaft verbunden werden. Der Gabelschaft ist an einem Gabelrohr des Fahrradrahmens schwenkbar gelagert. Hierzu sind in dem Gabelrohr zwei Lagerelemente vorgesehen, bei denen es sich insbesondere um Kugellager handelt. Das erfindungsgemäße Lenksystem für Fahrradlenker weist ein erstes Anschlagelement auf, das am Gabelschaft fixierbar ist. Dieses erste Anschlagelement weist zwei Anschläge auf. Mit Hilfe dieser beiden Anschläge ist ein linker und rechter Lenkeinschlag begrenzt. Ferner ist ein zweites Anschlagelement vorgesehen, das am Fahrradrahmen fixierbar ist und mit dem ersten Anschlagelement zusammenwirkt. Erfindungsgemäß ist das erste Anschlagelement zwischen den beiden Lagerelementen am Gabelschaft angeordnet. Das erste Anschlagelement ist somit innerhalb des Gabelrohrs angeordnet und insofern durch das Gabelrohr vor Verschmutzung geschützt. Ferner weist eine derartige Anordnung des ersten Anschlagelements den Vorteil auf, dass es sich um ein integriertes Element handelt, das von außen nicht oder allenfalls geringfügig sichtbar ist. Durch die Anordnung des ersten Anschlagelements zwischen den beiden Lagerelementen ist in besonders bevorzugter Ausführungsform eine Anordnung und Montage unabhängig von den Lagerelementen möglich. Es ist somit nicht erforderlich, besonders ausgestaltete Lagerelemente vorzusehen. Ferner wird die Montage der Lagerelemente nicht erschwert.

Vorzugsweise ist das erste Anschlagelemente kraftschlüssig, insbesondere klemmend am Gabelschaft fixiert. Hierbei handelt es sich um eine kostengünstige Ausgestaltung des ersten Anschlagelements, das zudem auf einfache Weise montiert werden kann. Möglich wäre auch eine formschlüssige Verbindung zwischen dem ersten Anschlagelement und dem Gabelschaft, beispielsweise durch eine Verzahnung, eine Riffelung, miteinander korrespondierende Ansätze und Ausnehmungen oder dergleichen. Eine kraftschlüssige Verbindung könnte durch Aufpressen erfolgen, wobei es bevorzugt ist, das erste Anschlagelement klemmend am Gabelschaft zu fixieren.

Vorzugsweise ist das erste Anschlagelement ringförmig ausgebildet und umgibt den Gabelschaft vorzugsweise vollständig. Besonders bevorzugt ist es, dass das insbesondere ringförmig ausgebildete erste Anschlagelement durch ein Klemmelement am Gabelschaft fixierbar ist. Dies ist in besonders bevorzugter Ausführungsform dadurch realisiert, dass das erste Anschlagelement ringförmig ausgebildet ist und einen Schlitz aufweist. Mit Hilfe eines insbesondere als Schraube ausgebildeten Klemmelements kann ein klemmendes Fixieren des ersten Anschlagelements am Gabelschaft auf einfache Weise realisiert werden.

Vorzugsweise weist der Gabelschaft zwischen den beiden Lagerelementen einen zylindrischen Bereich auf, in dem das erste Anschlagelement angeordnet ist. Aufgrund des Anordnens des ersten Anschlagelements in einem zylindrischen Bereich ist insbesondere auf einfache Weise eine klemmende Fixierung realisierbar. Bevorzugt ist es, dass dieser zylindrische Bereich derart ausgebildet ist, dass auch das obere Lagerelement in demselben zylindrischen Bereich angeordnet ist. Gegebenenfalls können auch zwei zylindrische Bereiche vorgesehen sein, die unterschiedliche Durchmesser aufweisen, wobei insbesondere aus fertigungstechnischen Gründen ein zylindrischer Bereich mit gleichem Durchmesser bevorzugt ist.

An den zylindrischen Bereich schließt sich in bevorzugter Ausführungsform ein konischer Bereich an, der sich in Richtung des unteren Lagerelements erweitert. Der Durchmesser des Gabelschafts nimmt somit, ausgehend von dem zylindrischen Bereich, in Richtung des unteren Lagerelements zu. Das untere Lagerelement ist sodann vorzugsweise wiederum in einem zylindrischen Bereich mit einem größeren Durchmesser angeordnet.

Besonders bevorzugt ist es, dass die beiden Anschläge des ersten Anschlagelements Anschlagflächen aufweisen. Diese Flächen berühren in den jeweiligen Grenzwinkeln, bei einem extremen rechten oder linken Einschlag des Lenkers, das zweite Anschlagelement. Die beiden Anschlagsflächen weisen zueinander vorzugsweise einen Winkel von mindestens 180° auf. Insbesondere ist der Winkel >220°, wobei der Winkel vorzugsweise <300°, insbesondere <240° ist. Der Lenker kann somit, bezogen auf die Fahrtrichtung um mindestens 90°, insbesondere weniger als 120° eingeschlagen werden, bevor die linke oder rechte Anschlagfläche das zweite Anschlagelement berührt.

Vorzugsweise weist insbesondere das Gabelrohr eine Ausnehmung auf, in der das zweite Anschlagelement angeordnet ist. Insbesondere kann das zweite Anschlagelement in diese Ausnehmung eingesteckt werden. Die Fixierung kann über entsprechende Fixierungsmittel, über Rastelemente oder auch klemmend, insbesondere auch allein aufgrund des Formschlusses, erfolgen. Die Ausnehmung, in der das zweite Anschlagelement angeordnet ist, ist vorzugsweise in Fahrtrichtung des Fahrrads, d.h. an einer Vorderseite des Gabelrohrs offen. Besonders bevorzugt ist es, dass das zweite Anschlagelement ein Halteelement aufweist, das zum Verbinden mit dem Fahrradrahmen, insbesondere zum Einstecken in die Ausnehmung dient.

Das zweite Anschlagelement kann beispielsweise auch zweiteilig ausgebildet sein. Hierbei kann auf einer Innenseite des Gabelrohrs das die beiden Anschläge aufweisende Teil des zweiten Anschlagelements vorgesehen sein und auf einer Außenseite des Gabelrohrs ein Halte- oder Fixierelement. Die beiden Teile können sodann durch eine Ausnehmung im Gabelrohr miteinander verbunden werden. Die Verbindung kann beispielsweise eine Schraube, eine Rastverbindung oder dergleichen erfolgen. Hierdurch ist eine einfache Montage bei gleichzeitig guter Kraftübertragung möglich.

In einer alternativen Ausführungsform des zweiten Anschlagelements kann dies als integraler Bestandteil des Gabelrohrs ausgebildet sein. Beispielsweise wird das Anschlagelement hierzu bereits während der Herstellung des Gabelrohrs an der Innenseite des Gabelrohrs vorgesehen oder ist sogar einstückig mit diesem ausgebildet. Zum Anordnen eines integrierten zweiten Anschlagelements an der Innenseite des Gabelrohrs kann eine kleine Öffnung oder Ausnehmung an der Innenseite des Gabelrohrs vorgesehen sein, in die ein Ansatz oder Stift des zweiten Anschlagelements von innen eingefügt wird. Das zweite Anschlagelement wird sodann an der Innenseite des Gabelrohrs, beispielsweise durch Einkleben fixiert. Die Vertiefung an der Innenseite des Gabelrohrs, in die ein Ansatz des zweiten Anschlagselements ragt, dient zur Kraftübertragung. Die Ausnehmung an der Innenseite des Gabelrohrs kann hierbei derart ausgebildet sein, dass diese nicht durchgängig ist, so dass die Außenseite des Gabelrohrs verschlossen bleibt. Auch kann eine durchgehende Öffnung zur Aufnahme des Pins oder Ansatzes vorgesehen sein. Nach dem Fixieren, insbesondere Einkleben des zweiten Anschlagelements kann das Loch von außen überspachtelt und überschliffen werden, sodass anschließend nach einer Lackierung des Gabelrohrs das zweite Anschlagelement nicht sichtbar ist.

Vorzugsweise ist in dem Gabelrohr eine Ausnehmung oder Öffnung vorgesehen, um insbesondere mit einem Werkzeug einen Zugang zum Klemmelement zu haben.

Das Anordnen des ersten Anschlagelements zwischen den beiden Lagerelementen hat insbesondere den Vorteil, dass die beiden Anschläge des Anschlagelements eine relativ große Anschlagfläche aufweisen können, so dass die auftretenden ggf. großen Kräfte gleichmäßig übertragen werden können. Dies stellt insbesondere gegenüber Lenkanschlägen, die oberhalb des oberen Lagerelements sichtbar angeordnet sind, einen erheblichen Vorteil dar, da diese innerhalb eines geringen Bauraums angeordnet werden müssen und somit zwangsweise kleine Anschlagsflächen aufweisen.

Das erste Anschlagelement ist in besonders bevorzugter Weiterbildung der Erfindung mit einer Lenkungsstabilisierung verbunden. Die Lenkungsstabilisierung dient insbesondere zur Stabilisierung der Geradeausfahrt. Bevorzugt ist es als Lenkungsstabilisierung ein Federelement vorzusehen, so dass die Lenkerstabilisierung zumindest ein Federelement aufweist. Durch das Federelement, bei dem es sich um ein elastisches Element, ein dehnbares Band, eine Feder oder dergleichen handeln kann, wird eine Rückstellkraft erzeugt. Diese Rückstellkraft wird durch einen Lenkeinschlag erzeugt, so dass ein Rückstellmoment entsteht. Bevorzugt ist es, dass die Lenkungs-Stabilisiereinrichtung zumindest teilweise im Oberrohr des Fahrradrahmens angeordnet ist. Besonders bevorzugt ist es, dass die Lenkungs-Stabilisiereinrichtung von außen nicht sichtbar ist und insofern vollständig im Oberrohr und Gabelrohr des Rahmens angeordnet ist. Beispielsweise können zwei bandförmig ausgebildete Stabilisierungselemente einander gegenüberliegend, d.h. insbesondere seitlich an dem ersten Anschlagelement angeordnet sein. Die beiden bandförmigen Stabilisierungselemente sind in Richtung des Oberrohrs geführt und sind selbst elastisch ausgebildet und/oder mit einem elastischen Element verbunden. Die Lenkungs-Stabilisiereinrichtung kann auch als Drehfeder ausgebildet sein oder eine Drehfeder aufweisen.

Nachfolgend werden die Figuren anhand bevorzugten Ausführungsformen unter Bezugnahme auf die anliegenden Zeichnungen näher erläutert.

Es zeigen:
- Figur 1: zeigt eine schematische Schnittansicht einer bevorzugten Ausführungsform des erfindungsgemäßen Lenksystems und
- Figur 2: eine schematische Schnittansicht durch das erste Anschlagelement entlang der Linie II-II in Figur 1.

Das erfindungsgemäße Lenksystem weist ein Gabelrohr 10 eines Fahrradrahmens auf, das üblicherweise mit einem nicht dargestellten Oberrohr sowie einem Unterrohr des Fahrradrahmens verbunden ist. Innerhalb des Gabelrohrs 10 ist ein oberes Lagerelement 12 sowie ein unteres Lagerelement 14 angeordnet.

Die beiden Lagerelemente dienen zum schwenkbaren Lagern eines innerhalb des Gabelrohrs 10 angeordneten Gabelschafts 16. Mit einem in der Figur oberen Ende des Gabelschafts 16 kann ein nicht dargestellter Lenkervorbau verbunden werden. Das in der Figur untere Ende des Gabelschafts 16 ist üblicherweise über eine Gabelbrücke mit zwei Gabelbeinen verbunden, bzw. einstückig ausgebildet.

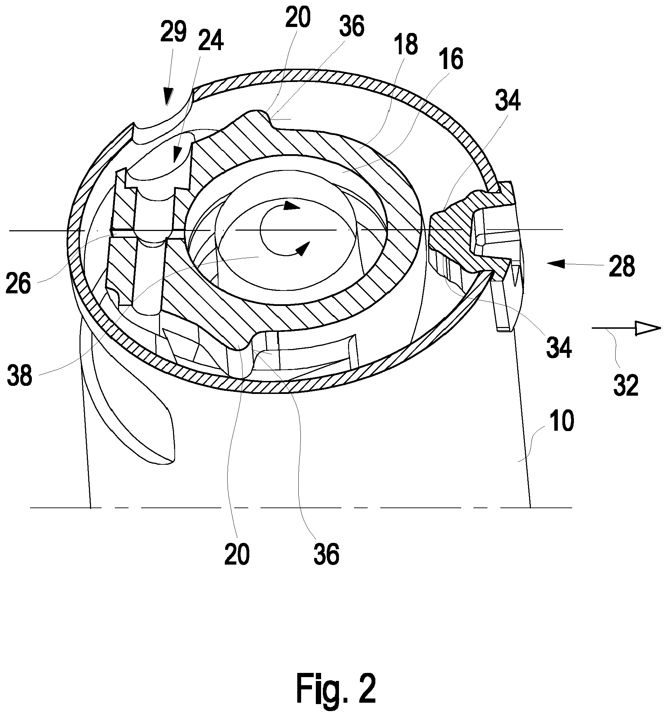

Innerhalb des Gabelrohrs 10 zwischen den beiden Lagerelementen 12, 14 ist erfindungsgemäß ein erstes Anschlagelement 18 angeordnet. Das erste Anschlagelement 18 umgibt im dargestellten Ausführungsbeispiel den Gabelschaft 16 ringförmig und weist zwei einander gegenüberliegende Anschlagelemente 20 (Figur 2) auf.

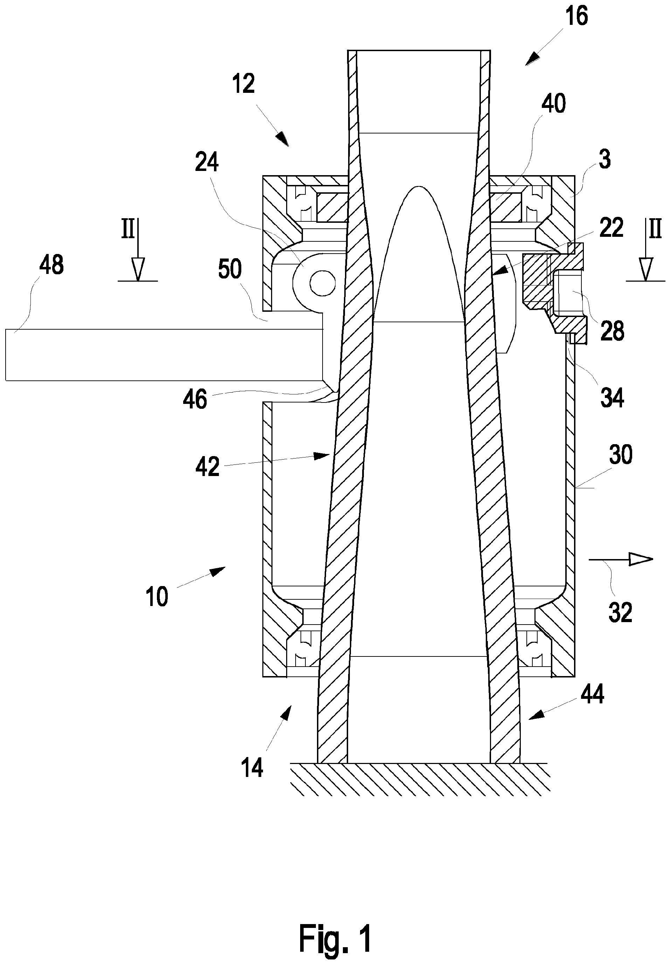

Zum klemmenden Fixieren des ersten Anschlagelements in einem zylindrischen Bereich 22 (Figur 1) des Gabelschafts 16 weist das erste Anschlagelement einen Ansatz 24 auf, in dem eine nicht dargestellte Schraube zur klemmenden Fixierung angeordnet werden kann. Im Bereich des Ansatzes weist das ringförmige erste Anschlagelement einen Schlitz 26 auf.

Für die Zugänglichkeit der Schraube ist im Gabelrohr eine Öffnung 29 vorgesehen.

Ferner ist ein zweites Anschlagelement 28 vorgesehen. Das Anschlagelement 28 ist an einer Vorderseite 30 des Gabelrohrs 10, d.h. an einer in Fahrtrichtung 32 weisenden Seite des Gabelrohrs 10 in einer Ausnehmung 34 angeordnet. Insbesondere kann in der Ausnehmung eine Fixierung durch Vorsehen von Rastelementen, Klemmelementen oder dergleichen erfolgen. Das Anschlagelement 28 weist zwei einander gegenüberliegende Anschlagflächen 34 auf. Diese wirken mit den beiden Anschlagflächen 36 der beiden Anschläge 20 zusammen und begrenzen somit den maximalen Einschlagwinkel, wie durch den Pfeil 38 angedeutet.

In dem zylindrischen Bereich 22 ist im dargestellten Ausführungsbeispiel das erste Anschlagelement 18 klemmend befestigt sowie auch das obere Lagerelement 12 über einen Zwischenring 40 angeordnet. In Richtung des unteren Lagerelements 14 schließt sich an den zylindrischen Bereich 22 ein konischer Bereich 42 an. Der Durchmesser des konischen Bereichs 42 nimmt in Richtung des unteren Lagerelements 14 zu, wobei das Lagerelement 14 vorzugsweise sodann wieder in einem zylindrischen Bereich angeordnet ist.

In einer bevorzugten Ausführungsform kann das erste, insbesondere ringförmige Anschlagelement 18 derart ausgebildet sein, dass sich dieses auch in Richtung des unteren Lagerelements 14 erstreckt und somit einen weiteren, insbesondere teilringförmig ausgebildeten Ansatz 46 aufweist. Dieser erstreckt sich vorzugsweise um mindestens 180° in dem hinteren, d.h. entgegen der Fahrtrichtung 32 weisenden Bereich des ersten Anschlagelements 28. Mit dem Ansatz 46 kann eine Lenkungs-Stabilisiereinrichtung verbunden sein. Im dargestellten Ausführungsbeispiel ist auf beiden Seiten des Ansatzes 46, etwa auf Höhe der Anschläge 20 jeweils ein bandförmiges Element 48 angeordnet. Dies ist durch eine Öffnung 50 im Gabelrohr 10 geführt und erstreckt sich in das nicht dargestellte Oberrohr. In diesem erfolgt eine Fixierung der gegebenenfalls elastisch ausgebildeten Bänder unmittelbar oder mittelbar über eine Verbindung mit einem weiteren Federelement. Durch eine derartige Lenkungs-Stabilisiereinrichtung kann ein Rückstellmoment durch den Lenkeinschlag erzeugt werden, das den Lenker in die Fahrtrichtung zurückdreht. Eine Kombination einer derartigen Lenkungs-Stabilisiereinrichtung in Verbindung mit einem zwischen den beiden Lagerelementen 12, 14 angeordneten ersten Anschlagelement stellt eine besonders kompakte Ausgestaltung eines Lenkanschlags in Verbindung mit einer Lenkungs-Stabilisiereinrichtung dar.

Weitere Aspekte der Erfindung:
1. Lenksystem für Fahrradlenker mit,
   einem über zwei Lagerelemente (12, 14) in einem Gabelrohr (10) eines Fahrradrahmens schwenkbar gelagerten Gabelschaft (16),
   einem am Gabelschaft (16) einer Fahrradgabel fixierbaren ersten Anschlagelement (18) mit zwei Anschlägen (20), und
   einem am Fahrradrahmen, insbesondere am Gabelrohr (10) fixierbaren, mit dem ersten Anschlagelementen (18) zusammenwirkenden zweiten Anschlagelement (28),
   dadurch gekennzeichnet, dass
   das erste Anschlagelement (18) zwischen den beiden Lagerelementen (12, 14) angeordnet ist.
2. Lenksystem nach Aspekt 1, dadurch gekennzeichnet, dass das erste Anschlagelement (18) kraftschlüssig, insbesondere klemmend am Gabelschaft (16) fixiert ist.
3. Lenksystem für Fahrradlenker nach Aspekt 1 oder 2, dadurch gekennzeichnet, dass das erste Anschlagelement (18) ringförmig ausgebildet ist.
4. Lenksystem für Fahrradlenker nach einem der Aspekte 1 bis 3, dadurch gekennzeichnet, dass das erste Anschlagelement (18) zum klemmenden Fixieren am Gabelschaft ein Klemmelement aufweist.
5. Lenksystem für Fahrradlenker nach einem der Aspekte 1 bis 4, dadurch gekennzeichnet, dass der Gabelschaft (16) zwischen den beiden Lagerelementen (12, 14) einen zylindrischen Bereich (22) aufweist, in dem das erste Anschlagelement (18) angeordnet ist.
6. Lenksystem für Fahrradlenker nach Aspekt 5, dadurch gekennzeichnet, dass in dem zylindrischen Bereich (22) zusätzlich das obere Lagerelement (12) angeordnet ist.
7. Lenksystem für Fahrradlenker nach einem der Aspekte 5 bis 6, dadurch gekennzeichnet, dass sich an den zylindrischen Bereich (22) ein konischer Bereich (42) anschließt, der sich in Richtung des unteren Lagerelements (14) erweitert.
8. Lenksystem für Fahrradlenker nach einem der Aspekte 1 bis 7, dadurch gekennzeichnet, dass Anschlagflächen (36) des ersten Anschlagelements (18) einen Winkel von mindestens 180°, vorzugsweise mindestens 220° zueinander aufweisen.
9. Lenksystem für Fahrradlenker nach einem der Aspekte 1 bis 8, dadurch gekennzeichnet, dass die Anschläge (20, 26) Anschlagflächen (36) zur Begrenzung eines linken oder rechten Lenkeinschlags aufweisen.
10. Lenksystem für Fahrradlenker nach einem der Aspekte 1 bis 9, dadurch gekennzeichnet, dass das zweite Anschlagelement (28) als integrales Bauteil des Gabelrohrs (10) ausgebildet ist.
11. Lenksystem für Fahrradlenker nach einem der Aspekte 1 bis 10, dadurch gekennzeichnet, dass das zweite Anschlagelement (28) in einer Ausnehmung im Fahrradrahmen, insbesondere im Gabelrohr (10) des Fahrradrahmens anordenbar ist.
12. Lenksystem für Fahrradlenker nach Aspekt 11, dadurch gekennzeichnet, dass die Ausnehmung an einer in Fahrtrichtung (32) weisenden Vorderseite (30) des Gabelrohrs (10) angeordnet ist.

## Patentansprüche

1. Lenksystem für Fahrradlenker mit,
einem über zwei Lagerelemente (12, 14) in einem Gabelrohr (10) eines Fahrradrahmens schwenkbar gelagerten Gabelschaft (16),
einem am Gabelschaft (16) einer Fahrradgabel fixierbaren ersten Anschlagelement (18) mit zwei Anschlägen (20), und
einem am Fahrradrahmen, insbesondere am Gabelrohr (10) fixierbaren, mit dem ersten Anschlagelementen (18) zusammenwirkenden zweiten Anschlagelement (28),
**dadurch gekennzeichnet, dass**
das erste Anschlagelement (18) zwischen den beiden Lagerelementen (12, 14) angeordnet ist.

2. Lenksystem nach Anspruch 1, **dadurch gekennzeichnet, dass** das erste Anschlagelement (18) kraftschlüssig, insbesondere klemmend am Gabelschaft (16) fixiert ist.

3. Lenksystem für Fahrradlenker nach Anspruch 1 oder 2, **dadurch gekennzeichnet, dass** das erste Anschlagelement (18) ringförmig ausgebildet ist.

4. Lenksystem für Fahrradlenker nach einem der Ansprüche 1 bis 3, **dadurch gekennzeichnet, dass** das erste Anschlagelement (18) zum klemmenden Fixieren am Gabelschaft ein Klemmelement aufweist.

5. Lenksystem für Fahrradlenker nach einem der Ansprüche 1 bis 4, **dadurch gekennzeichnet, dass** der Gabelschaft (16) zwischen den beiden Lagerelementen (12, 14) einen zylindrischen Bereich (22) aufweist, in dem das erste Anschlagelement (18) angeordnet ist.

6. Lenksystem für Fahrradlenker nach Anspruch 5, **dadurch gekennzeichnet, dass** in dem zylindrischen Bereich (22) zusätzlich das obere Lagerelement (12) angeordnet ist.

7. Lenksystem für Fahrradlenker nach einem der Ansprüche 5 bis 6, **dadurch gekennzeichnet, dass** sich an den zylindrischen Bereich (22) ein konischer Bereich (42) anschließt, der sich in Richtung des unteren Lagerelements (14) erweitert.

8. Lenksystem für Fahrradlenker nach einem der Ansprüche 1 bis 7, **dadurch gekennzeichnet, dass** Anschlagflächen (36) des ersten Anschlagelements (18) einen Winkel von mindestens 180°, vorzugsweise mindestens 220° zueinander aufweisen.

9. Lenksystem für Fahrradlenker nach einem der Ansprüche 1 bis 8, **dadurch gekennzeichnet, dass** die Anschläge (20, 26) Anschlagflächen (36) zur Begrenzung eines linken oder rechten Lenkeinschlags aufweisen.

10. Lenksystem für Fahrradlenker nach einem der Ansprüche 1 bis 9, **dadurch gekennzeichnet, dass** das zweite Anschlagelement (28) als integrales Bauteil des Gabelrohrs (10) ausgebildet ist.

11. Lenksystem für Fahrradlenker nach einem der Ansprüche 1 bis 10, **dadurch gekennzeichnet, dass** das zweite Anschlagelement (28) in einer Ausnehmung im Fahrradrahmen, insbesondere im Gabelrohr (10) des Fahrradrahmens anordenbar ist.

12. Lenksystem für Fahrradlenker nach Anspruch 11, **dadurch gekennzeichnet, dass** die Ausnehmung an einer in Fahrtrichtung (32) weisenden Vorderseite (30) des Gabelrohrs (10) angeordnet ist.

13. Lenksystem für Fahrradlenker nach einem der Ansprüche 1 bis 12, **dadurch gekennzeichnet, dass** das erste Anschlagelement (18) mit einer Lenkungs-Stabilisiereinrichtung (48) verbunden ist, wobei die Lenkungs-Stabilisiereinrichtung vorzugsweise ein Federelement (48) aufweist.

14. Lenksystem für Fahrradlenker nach Anspruch 12 oder 13, **dadurch gekennzeichnet, dass** die Lenkungs-Stabilisiereinrichtung zumindest teilweise im Oberrohr des Fahrradrahmens angeordnet ist.

15. Lenksystem für Fahrradlenker nach einem der Ansprüche 12 bis 14, **dadurch gekennzeichnet, dass** die Lenkungs-Stabilisiereinrichtung zwei insbesondere bandförmig ausgebildete Stabilisierungselemente (48) aufweist, die vorzugsweise einander gegenüberliegend mit dem ersten Anschlagelement (18) verbunden sind.
